# EUROPÄISCHE PATENTANMELDUNG

(11) **EP 0 976 669 A2**
(43) Veröffentlichungstag der Anmeldung: **02.02.2000**
(21) Anmeldenummer: 99710006.0
(22) Anmeldetag: 19.07.1999
(51) Int. Cl.: B65G 37/02

(54) **Verfahren und Vorrichtung zum Transport von plattenförmigem Transportgut**

(30) Priorität: 24.07.1998 DE 19833272
(71) Anmelder: Schuler Automation GmbH & Co. KG, 91093 Hessdorf (DE)
(72) Erfinder: Vogel, Norbert, 91088 Bubenreuth (DE)
(74) Vertreter: Gassner, Wolfgang, Dr.

(57) **Zusammenfassung**

Die Erfindung betrifft ein Verfahren zum Transport von plattenförmigem Transportgut mit folgenden Schritten:
a) Transport des Transportguts entlang eines vorgegebenen Transportwegs (T) mittels eines Längsstransportmittels 8,
b) wahlweise Übergabe des Transportguts an eines von mindestens zwei ersten Querfördermitteln 11a, 11b,
c) Transport des Transportguts mittels des einen der ersten Querfördermittel 11a, 11b entlang einem dazugehörigen quer zum Transportweg T verlaufenden ersten Querweg 10a, 10b,
d) wahlweise Übergabe des Transportguts an eines von mindestens zwei erstes Längsfördermitteln 15a, 15b und
e) Transport des Transportguts mittels eines der ersten Längsfördermittel 15a, 15b entlang einem dazugehörigen parallel zum Transportweg T verlaufenden ersten Längsweg 12a, 12b.

## Beschreibung

Die Erfindung betrifft ein Verfahren und eine Vorrichtung zum Transport von plattenförmigem Transportgut.

Nach dem Stand der Technik ist aus einem 1994 erschienen Prospekt der Firma Automatic Feed Company, 476 East Riverview Napoleon, Ohio 53545-1899, eine Vorrichtung zum Transport von plattenförmigem Transportgut bekannt, bei der mittels eines Schneidwerkzeugs aus einem Blechband herausgeschnittene Blechplatten einer Transportrichtung folgend einem Längsstapler zugeführt werden. Der Längsstapler weist zwei Stapelpositionen auf, denen jeweils ein quer zur Transportrichtung angeordnetes Querfördermittel zugeordnet ist. Sobald auf einem der Querfördermittel ein aus Blechplatten bestehender Stapel vorgegebener Höhe gebildet worden ist, wird er auf einem durch das Querfördermittel gebildeten Querweg abtransportiert und an ein Längsfördermittel, z.B. ein Regalfahrzeug, übergeben, welches auf einem mit beiden Querwegen verbundenen Längsweg bewegbar ist. Der Stapel wird vom Längsfördermittel in ein Regal abgelegt. - Da bei der bekannten Vorrichtung bzw. nach dem bekannten Verfahren die Stapel von zwei Querfärdermitteln einem einzigen Längsfördermittel zugeführt werden, ist die Fördergeschwindigkeit der gesamten Vorrichtung durch die Geschwindigkeit begrenzt, mit der das Längsfördermittel die Stapel im Regal ablegt. Die Fördergeschwindigkeit wird insbesondere dann stark herabgesetzt, wenn die Stapel auf Paletten gebildet werden. In diesem Fall muß durch das einzige Längsfördermittel die vom Querfördermittel übergebene Palette mit Stapel in das Regal abgelegt, anschließend eine Leerpalette aus dem Regal entnommen und an den wartenden Querförderer übergeben werden. Bei einem Ausfall des Regalfahrzeugs muß die gesamte Vorrichtung abgeschaltet werden, weil eine Übergabe der Stapel von den Querförderern an ein Nottransportmittel, z.B. einem Gabelstapler, nicht möglich ist.

Aufgabe der Erfindung ist es, ein Verfahren sowie eine Vorrichtung bereitzustellen, mit denen die vorgenannten Nachteile beseitigt werden. Insbesondere sollen ein Verfahren und eine Vorrichtung angegeben werden, mit denen eine erhöhte Fördergeschwindigkeit ermöglicht ist. Des weiteren soll beim Ausfall eines Regalfahrzeugs ein Notbetrieb möglich sein.

Diese Aufgabe wird durch die Merkmale der Ansprüche 1 und 29 gelöst. Zweckmäßige Ausgestaltungen der Erfindung ergeben sich aus den Merkmalen der Ansprüche 2 bis 28 und 30 bis 56.

Nach Maßgabe der Erfindung ist ein Verfahren zum Transport von plattenförmigem Transportgut mit folgenden Schritten vorgesehen:
a) Transport des Transportguts entlang eines vorgegebenen Transportwegs mittels eines Längsstransportmittels,
b) Übergabe des Transportguts an mindestens ein erstes Querfördermittel,
c) Transport des Transportguts mittels des ersten Querfördermittels entlang einem dazugehörigen quer zum Transportweg verlaufenden ersten Querweg,
d) wahlweise Übergabe des Transportguts an eines von mindestens zwei ersten Längsfördermitteln und
e) Transport des Transportguts mittels eines der ersten Längsfördermittel entlang einem dazugehörigen parallel zum Transportweg verlaufenden ersten Längsweg.

Mittels des erfindungsgemäßen Verfahrens sind eine erhöhte Fördergeschwindigkeit sowie ein Notbetrieb möglich.

Zur Lösung der Aufgabe ist ferner eine Vorrichtung zum Transport von plattenförmigem Transportgut vorgesehen mit
aa) einem Längstransportmittel zum Transport des Transportguts entlang eines vorgegebenen Transportwegs,
bb) mindestens einem ersten Querfördermittel zum Transport des Transportguts entlang einem dazugehörigen quer zum Transportweg verlaufenden ersten Querweg,
cc) wobei das erste Querfördermittel in bezug zum Längstransportmittel so angeordnet ist, daß das Transportgut vom Längstransportmittel an das erste Querfördermittel übergebbar ist,
dd) mindestens zwei ersten Längsfördermitteln zum Transport des Transportguts entlang einem dazugehörigen parallel zum Transportweg verlaufenden ersten Längsweg,
ee) wobei die ersten Längsfördermittel in bezug zum ersten Querfördermittel so angeordnet sind, daß das Transportgut vom ersten Querfördertmittel wahlweise an eines der ersten Längsfördermittel übergebbar ist.

Die erfindungsgemäße Vorrichtung ermöglicht eine erhöhte Fördergeschwindigkeit und einen Notbetrieb.

Vorteilhafte Ausgestaltungen der Erfindung werden anhand der nachfolgenden Zeichnung näher erläutert. Hierin zeigen:
- Fig. 1a: eine schematische Längsschnittansicht einer ersten Vorrichtung,
- Fig. 1b: eine schematische Draufsicht auf die Vorrichtung gemäß Fig. 1a,
- Fig. 2a: eine schematische Teillängsschnittansicht einer zweiten Vorrichtung,
- Fig. 2b: eine Draufsicht gemäß Fig. 2a,
- Fig. 3a: eine schematische Teillängsschnittansicht einer dritten Vorrichtung,
- Fig. 3b: eine schematische Draufsicht gemäß Fig. 3a,
- Fig. 4a: eine schematische Teillängsschnittansicht einer vierten Vorrichtung,
- Fig. 4b: eine Draufsicht gemäß Fig. 4a,
- Fig. 5a: eine schematische Teillängsschnittansicht einer fünften Vorrichtung,
- Fig. 5b: eine Draufsicht gemäß Fig. 5a,
- Fig. 6a: eine schematische Teillängsschnittansicht einer sechsten Vorrichtung,
- Fig. 6b: eine Draufsicht gemäß Fig. 6a,
- Fig. 7a: eine schematische Teillängsschnittansicht einer siebten Vorrichtung,
- Fig. 7b: eine Draufsicht gemäß Fig. 7a,
- Fig. 8a: eine schematische Teillängsschnittansicht einer achten Vorrichtung,
- Fig. 8b: eine Draufsicht gemäß Fig. 8a,
- Fig. 9a: eine schematische Teillängsschnittansicht einer neunten Vorrichtung,
- Fig. 9b: eine Draufsicht gemäß Fig. 9a,
- Fig. 10a: eine schematische Teillängsschnittansicht einer zehnten Vorrichtung,
- Fig. 10b: eine Draufsicht gemäß Fig. 10a,
- Fig. 11a: eine schematische Teillängsschnittansicht einer elften Vorrichtung,
- Fig. 11b: eine Draufsicht gemäß Fig. 11a,
- Fig. 12a: eine schematische Teillängsschnittansicht einer zwölften Vorrichtung,
- Fig. 12b: eine Draufsicht gemäß Fig. 12a,
- Fig. 13a: eine schematische Teillängsschnittansicht einer dreizehnten Vorrichtung und
- Fig. 13b: eine Draufsicht gemäß Fig. 13a.

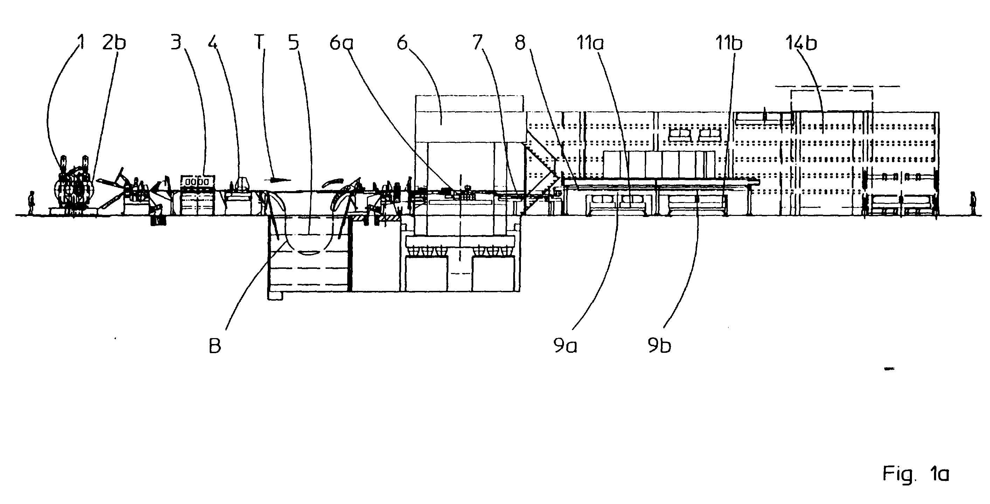

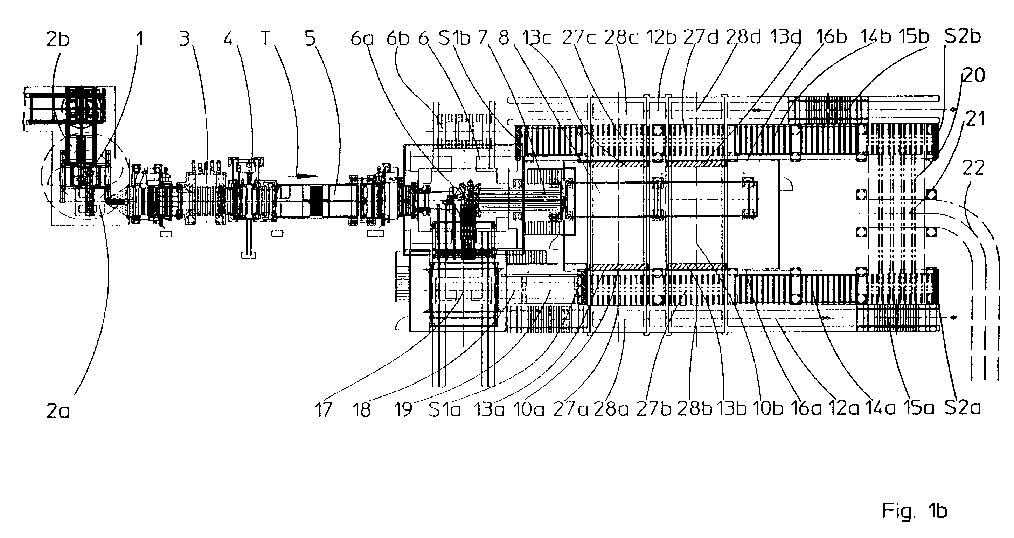

In den Fig. 1a und 1b ist eine Vorrichtung zum Herstellen und zum Transport von Blechplatten, wie sie im Automobilkarosseriebau Verwendung finden, gezeigt. Die Vorrichtung weist entlang einer Transportrichtung bzw. eines Transportwegs T eine Doppelhaspel 1 auf, auf der eine erste 2a sowie eine zweite Blechrolle 2b aufgenommen sind. Die Doppelhaspel 1 ist um eine vertikale Achse drehbar, so daß erforderlichenfalls eine aufgebrauchte Blechrolle gegen eine neue Blechrolle durch axiales Drehen der Doppelhaspel 1 in Betriebsposition gebracht werden kann. Ein von der Blechrolle 2a, 2b abgewickeltes Blechband B durchläuft eine Reinigungsstation 3 und eine Walzenrichtmaschine 4. Eine Schlaufenmulde 5 gewährleistet eine kontinuierliche Verfahrensführung. Der Schlaufenmulde 5 ist in Transportrichtung T eine mit einem Schneidwerkzeug 6a bestückte Presse 6 nachgeschaltet. Ein zum Wechseln des Werkzeugs 6a vorgesehener Wechseltisch 6b ist quer zur Transportrichtung 5 verfahrbar. Durch das Schneidwerkzeug 6a hergestellte Blechplatten bzw. Blechplatinen gelangen über einen Teleskopförderer 7 zu einem Längsstapler 8. Der Längsstapler 8 ist mit einer Einrichtung zur Erzeugung eines Magnetfelds und/oder von Unterdruck ausgestattet. Die Blechplatten werden vom Längsstapler 8 aufgenommen und hängend zu einer der beiden Stapelpositionen 9a, 9b transportiert. Jede der Stapelpositionen 9a bzw. 9b befindet sich auf einem ersten Querweg 10a bzw. 10b. Auf jedem ersten Querweg 10a, 10b ist ein erstes Querfördermittel 11a, 11b quer zur Transportrichtung T bewegbar. Bei dem ersten Querfördermittel 11a, 11b kann es sich beispielsweise um einen schienengebundenen Wagen, um einen Kettenförderer oder um einen Rohlengang handeln. Die beiden ersten Querwege 10a, 10b treffen auf zwei erste Längswege 12a, 12b, die parallel zur Transportrichtung T verlaufen. Zwischen den beiden ersten Längswegen 12a, 12b befindet sich der Längsstapler 8. Die ersten Querwege 10a, 10b erstrecken sich durch Öffnungen 13a, 13b, 13c, 13d, welche in jedem der den ersten Längswegen 12a, 12b zugeordneten Regale 14a, 14b vorgesehen sind. - Diese Anordnung ist vorteilhafterweise besonders platzsparend.

Auf den ersten Längswegen 12a, 12b sind Längsfördermittel 15a, 15b bewegbar. Dabei handelt es sich vorzugsweise um Regalfahrzeuge, mit denen aus Blechplatten bestehende Stapel vertikal und horizontal bewegbar sind. An jedem Regal 14a, 14b ist vorteilhafterweise an der dem Längsstapler 8 zugewandten einen Seite eine Schallschutzwand 16a, 16b befestigt. Daduch ist zweckmäßigerweise eine zumindest teilweise geschlossene den Schall besonders wirkungsvoll absorbierende Förderzelle realisierbar. Zur weiteren Schalldämmung können ferner eine beide Regale 14a, 14b überspannende aus einem Schallschutzmittel hergestellte Decke sowie eine quer zu den Schallschutzwänden 16a, 16b verlaufende Schallschutzquerwand vorgesehen sein.

Neben der Presse 6 ist hier ein Querstapler 17 angeordnet. Ein zweiter Längsweg 18 verläuft neben und parallel zum ersten Längsweg 12a. Der zweite Längsweg 18 wird durch ein zweites Längsfördermittel 19 gebildet. Dabei kann es sich wie bei dem ersten Querfördermittel 11a, 11b um einen schienengebundenen Wagen, einen Kettenförderer oder um einen Rollengang handeln. Der zweite Längsweg 18 endet vorteilhafterweise an einer ersten Stirnseite S1a des Regals 14a.

In der Nähe der in Transportrichtung T folgenden zweiten Stirnseiten S2a, S2b der Regale 14a, 14b ist ein zweites Querfördermittel 20 vorgesehen. Dabei kann es sich um einen Rollengang oder einen Kettenförderer handeln. Das zweite Querfördermittel 20 weist eine Andockstelle 21 für ein fahrerloses Transportsystem auf. Mit 22 ist ein weiterer Transportweg für das fahrerloses Transportsystem bezeichnet.

Mit 27a, 27b, 27c, 27d sind Abgabepositionen innerhalb der Regale 14a, 14b bezeichnet, von denen aus das Transportgut an die ersten Längsfördermittel 15a, 15b abgegeben werden kann. Zur Ermöglichung eines Notbetriebs sind ferner Notabgabepositionen 28a, 28b, 28c, 28d vorgesehen, von denen aus das Transportgut unmittelbar, Z.B. mittels eines Gabelstaplers, entnommen werden kann. Zu diesem Zweck kreuzen die ersten Querwege 10a, 10b die ersten Länsgwege 12a, 12b.

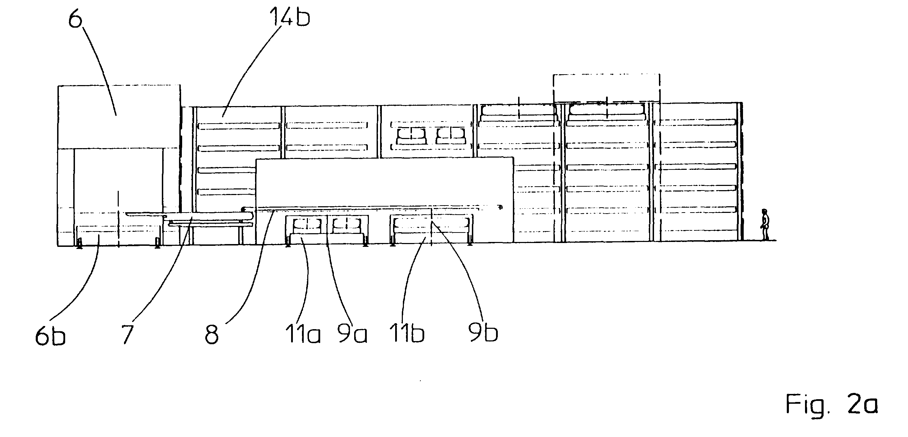

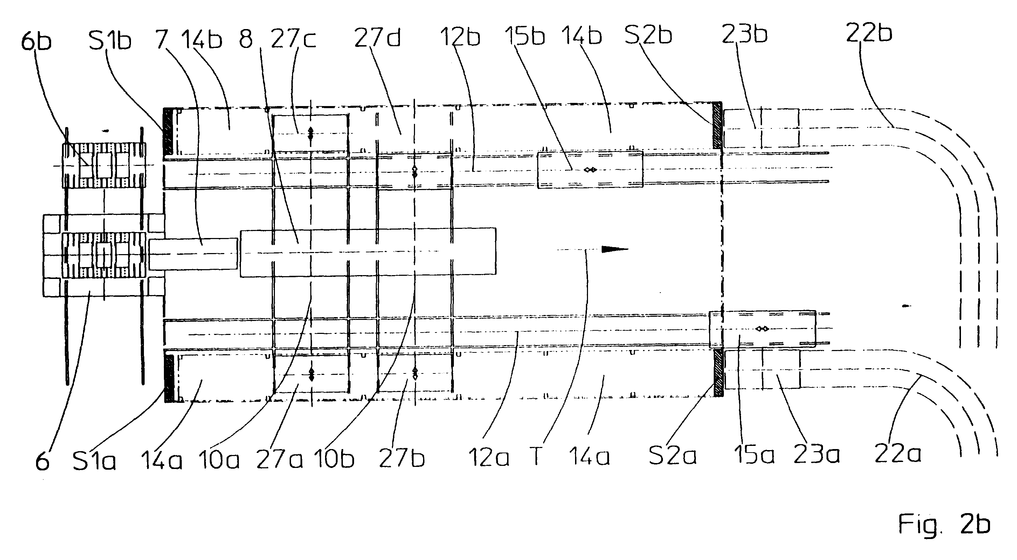

In den Fig. 2a und 2b ist abschnittsweise eine zweite Vorrichtung gezeigt. Die ersten Längswege 12a, 12b verlaufen in der Nähe der Regale 14a, 14b. Sie sind zwischen den Regalen 14a, 14b und dem Längsstapler 8 angeordnet. Die Querwege 10a, 10b kreuzen die Längswege 12a, 12b. Sie erstrecken sich durch die Öffnungen 13a, 13b, 13c, 13d in die Regale 14a, 14b. Die Öffnungen 13a, 13b, 13c, 13d sind so dimensioniert, daß das auf den ersten Querwegen transportierte Transportgut bzw. Stapel durch sie hindurch bewegt werden kann.

An den Stirnseiten S2a, S2b enden weitere Transportwege 22a, 22b. Sie sind Bestandteil eines fahrerlosen Transportsystems. Die ersten Längswege 12a, 12b verlaufen abschnittsweise parallel zu den weiteren Transportwegen 22a, 22b. Das ermöglicht eine einfache Übergabe von auf den ersten Längsfördermitteln 15a, 15b aufgenommenem Transportgut an weitere auf den weiteren Transportwegen 22a, 22b geführte Transportmittel 23a, 23b.

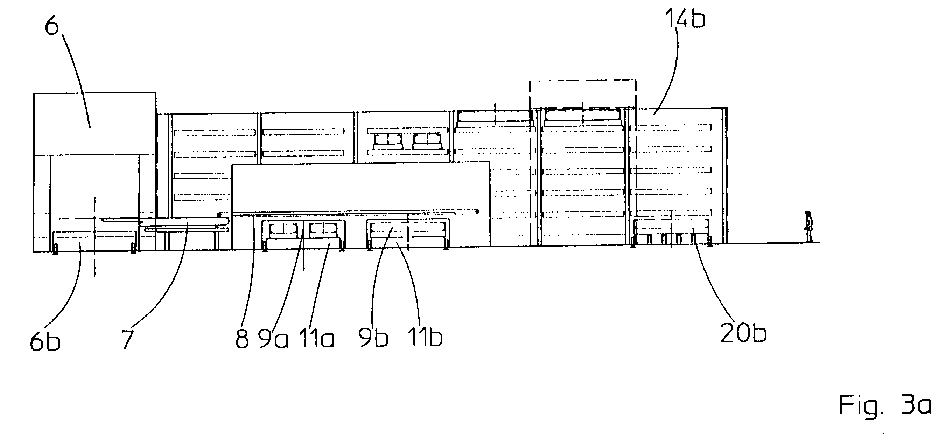

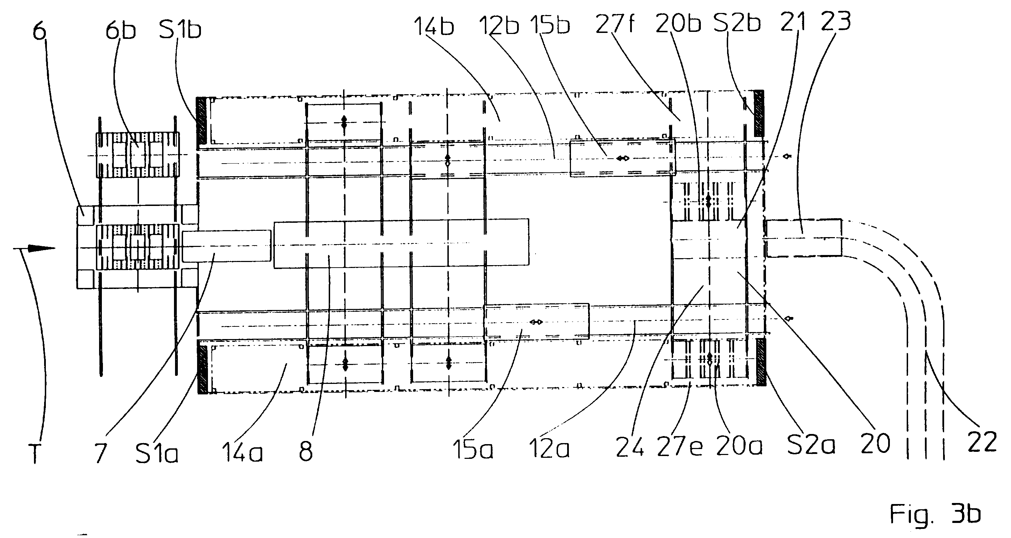

In den Fig. 3a, 3b ist ein Abschnitt einer vierten Vorrichtung gezeigt. Dabei sind zwei auf einem zweiten Querweg 24 bewegbare zweite Querfördermittel 20a, 20b vorgesehen. Es kann sich dabei um einen schienengebundenen Wagen handeln. Der zweite Querweg 24 trifft in der Nähe der zweiten Stirnseiten S2b auf die ersten Längswege 12a, 12b. Das zweite Querfördermittel 20 weist eine Andockstelle 21 für das weitere Transportmittel 23 auf. Die zweiten Querfördermittel 20a, 20b sind jeweils zwischen der Andockstelle 21 und dem Regal 14a, 14b bewegbar. Sie können durch Öffnungen 13e, 13f in Abgabeposition 27e, 27f gefahren werden.

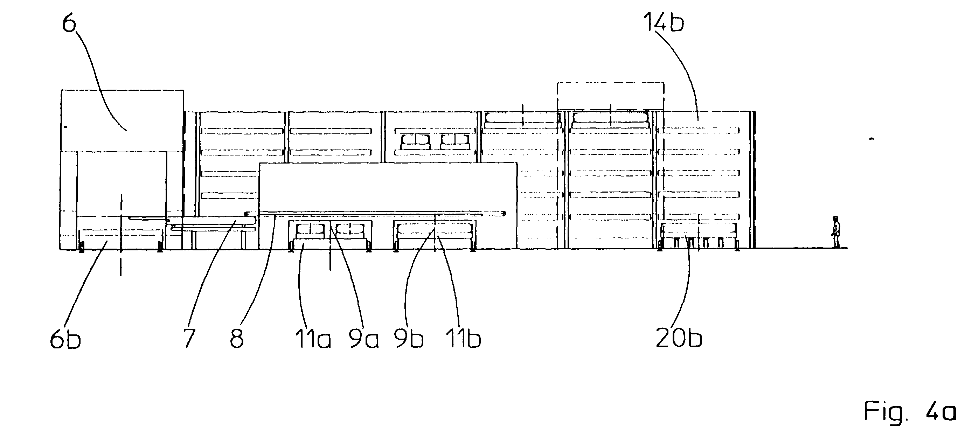

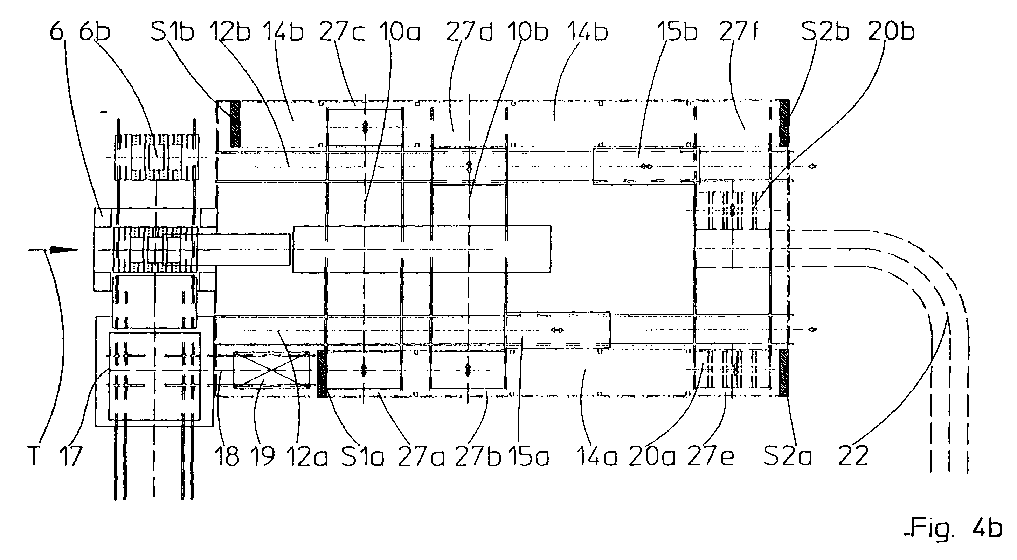

Bei der abschnittsweise in den Fig. 4a, 4b gezeigten vierten Vorrichtung ist zusätzlich ein neben der Presse 6 angeordneter auf einen dritten Querweg quer zur Transportrichtung T verfahrbarer Querstapler 17 vorgesehen. Ein zweiter Längsweg 18 erstreckt sich vom Querstapler 17 parallel zum ersten Längsweg 12a. Der zweite Längsweg 18 endet in der Nähe der ersten Stirnseite S1a des Regals 14a. Ein darauf geführtes zweites Längsfördermittel 19, z.B. ein schienengebundener Wagen, ist vom Querstapler 17 bis zur ersten Stirnwand S1a bewegbar. Darauf aufgenommenes Transportgut kann an das erste Längsfördermittel 15a übergeben werden.

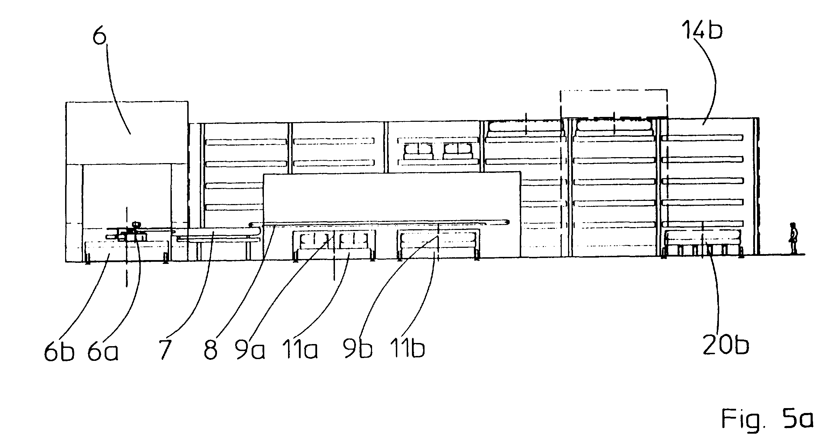

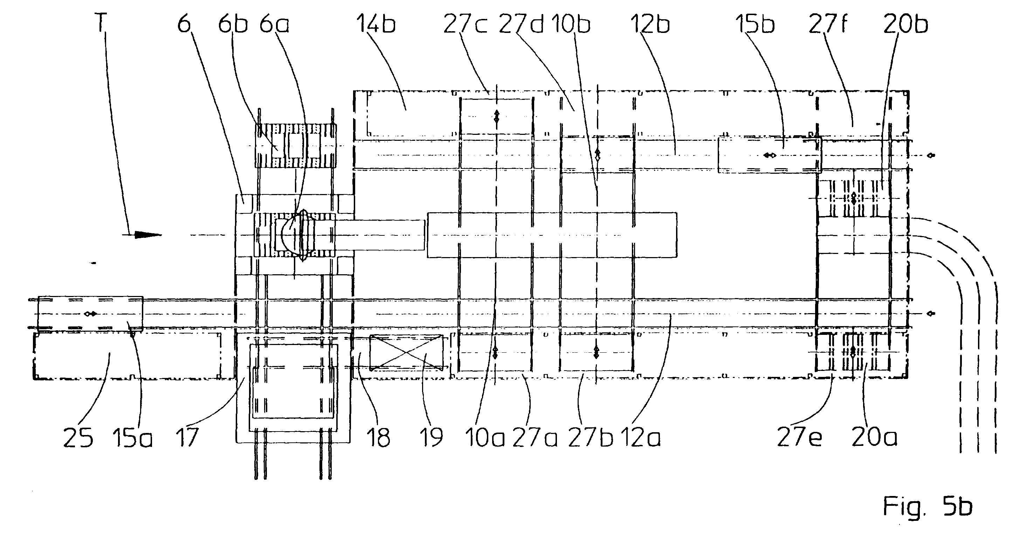

In den Fig. 5a, 5b ist ein Ausschnitt einer fünften Vorrichtung gezeigt. Dabei erstreckt sich der erste Längsweg 12a zwischen der Presse 6 und dem Querstapler 17 entgegen der Transportrichtung T. Ein weiteres Regal 25 ist in der Nähe des sich vom Querstapler 17 entgegen der Transportrichtung T erstreckenden Abschnitts des ersten Längswegs 12a angeordnet. Das weitere Regal 25 eignet sich beispielsweise zur Lagerung von Schneidwerkzeugen 6a. Mittels des ersten Längsfördermittels 15a können Schneidwerkzeuge 6a aus dem weiteren Regal 25 entnommen und gegen andere Werkzeuge 6a ausgetauscht werden. Gleichfalls ist es möglich im weiteren Regal 25 zusätzliche Stapelrahmen oder Paletten für den Querstapler 17 zu speichern.

Auf dem dritten Querweg ist neben dem Querstapler 17 auch ein Wechseltisch 6b verfahrbar. Mittels des Wechseltischs 6b ist es möglich, Werkzeuge 6a besonders einfach zu ersetzen. Dazu können entnommene Werkzeuge 6a vom Wechseltisch 6b an das erste Längsfördermittel 15a übergeben werden.

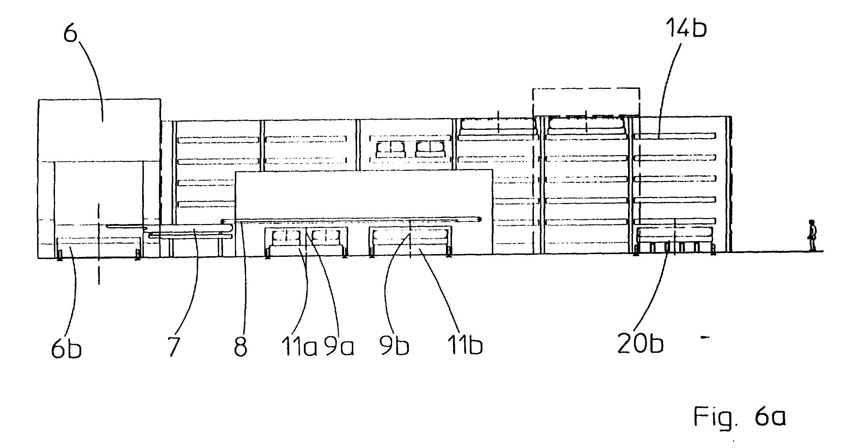

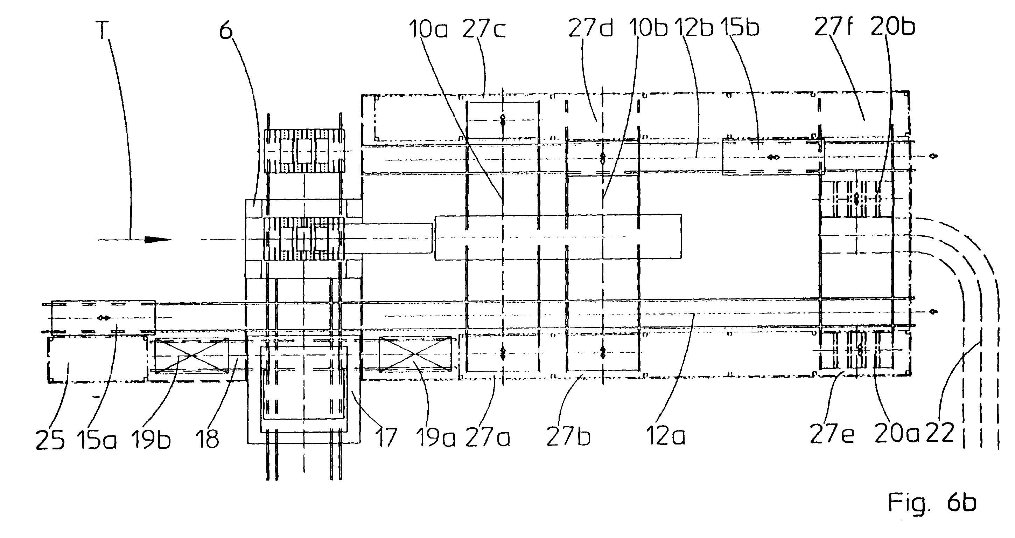

Bei der ausschnittsweise in den Fig. 6a, 6b dargestellten sechsten Vorrichtung erstreckt sich der zweite Längsweg 18 unter dem Querstapler 17 hindurch auf dessen andere Seite. Es sind hier zwei zweite Längsfördermittel 19a, 19b vorgesehen, welche abwechselnd als Stapelstellen dienen können.

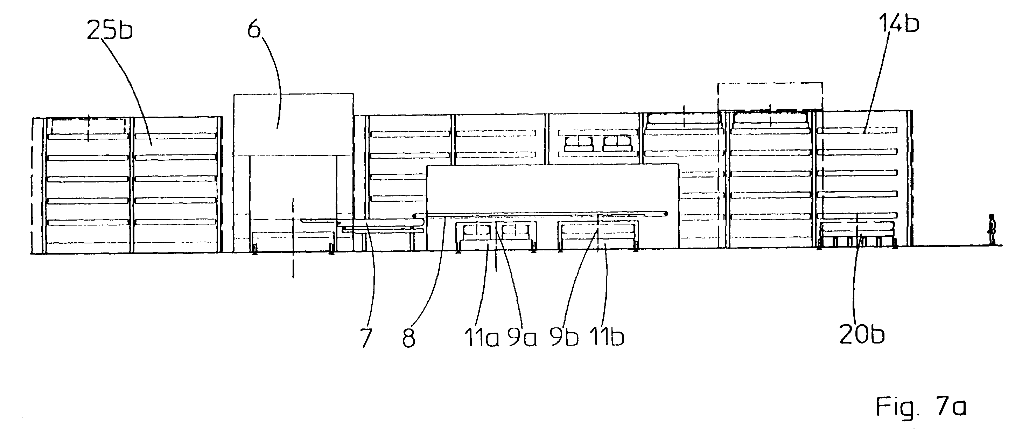

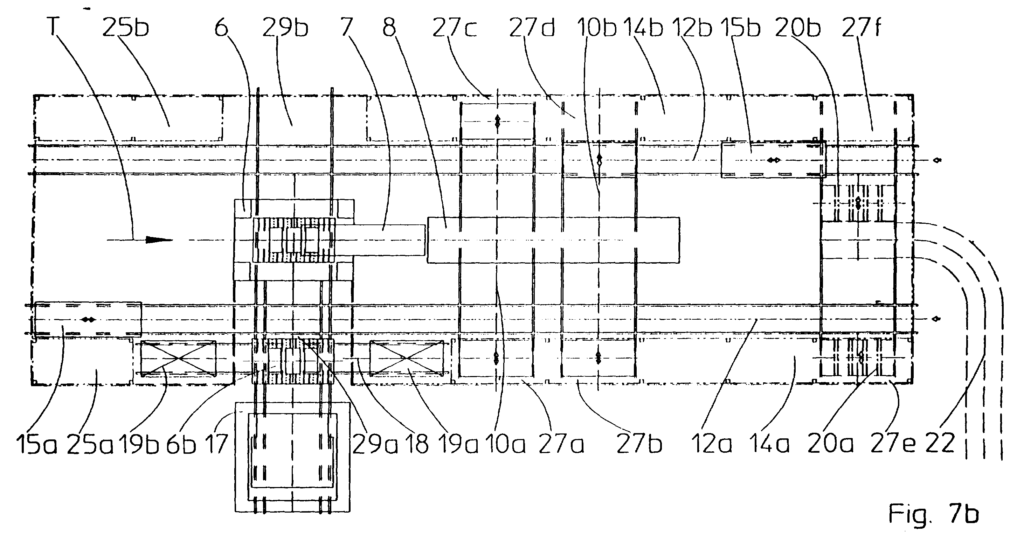

Die Fig. 7a, 7b zeigen einen Ausschnitt einer siebten Vorrichtung. Dabei erstreckt sich auch der erste Längsweg 12b entgegen der Transportrichtung T. Beide erste Längswege 12a, 12b sind hier gleichlang ausgebildet. Dem ersten Längsweg 12b ist hier ein weiteres Regal 25b zugeordnet. Mit 29a, 29b sind die Abgabepositionen des Wechseltischs 6b bezeichnet.

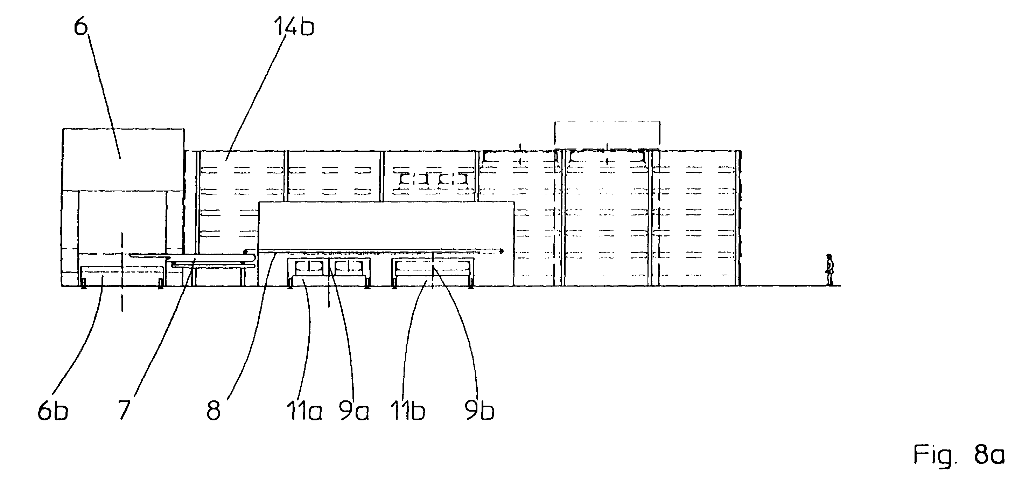

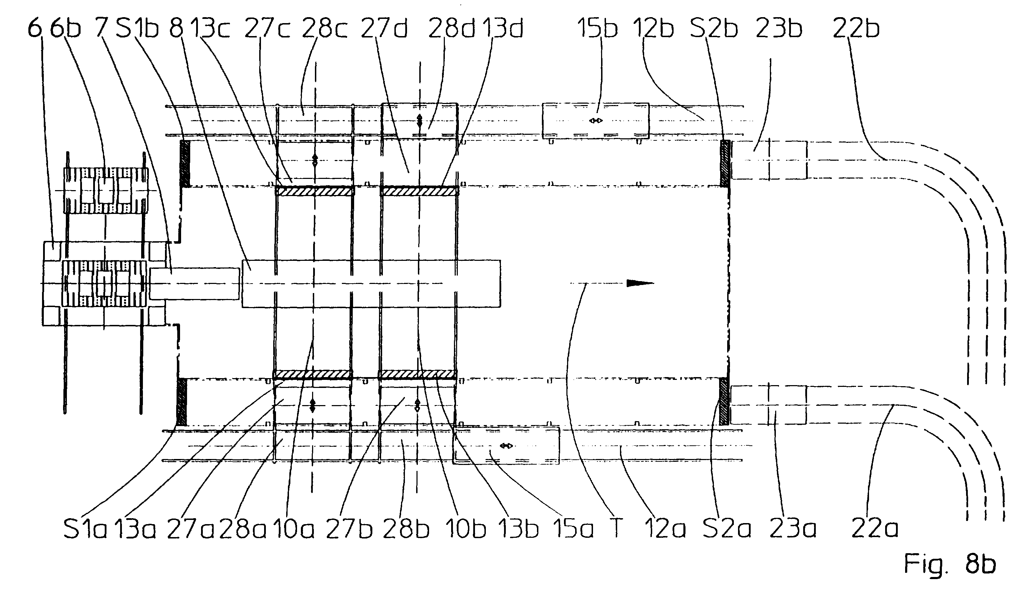

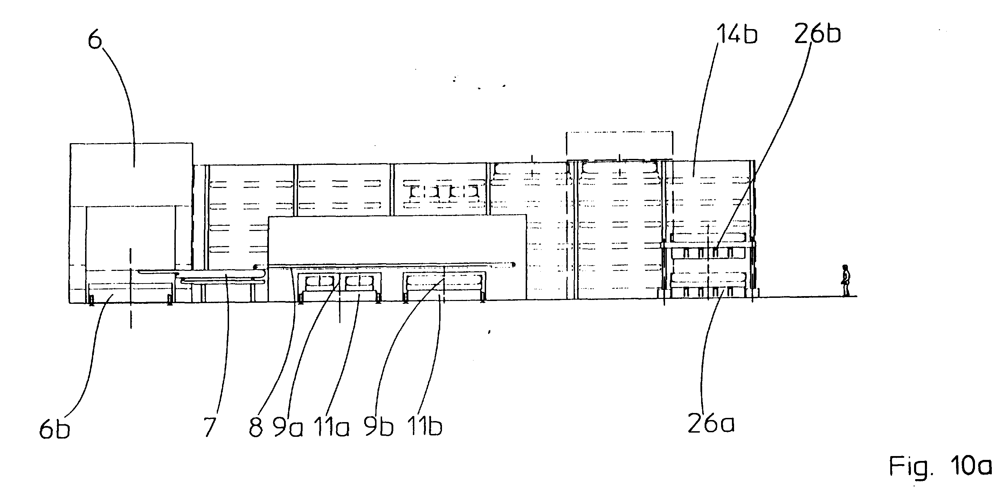

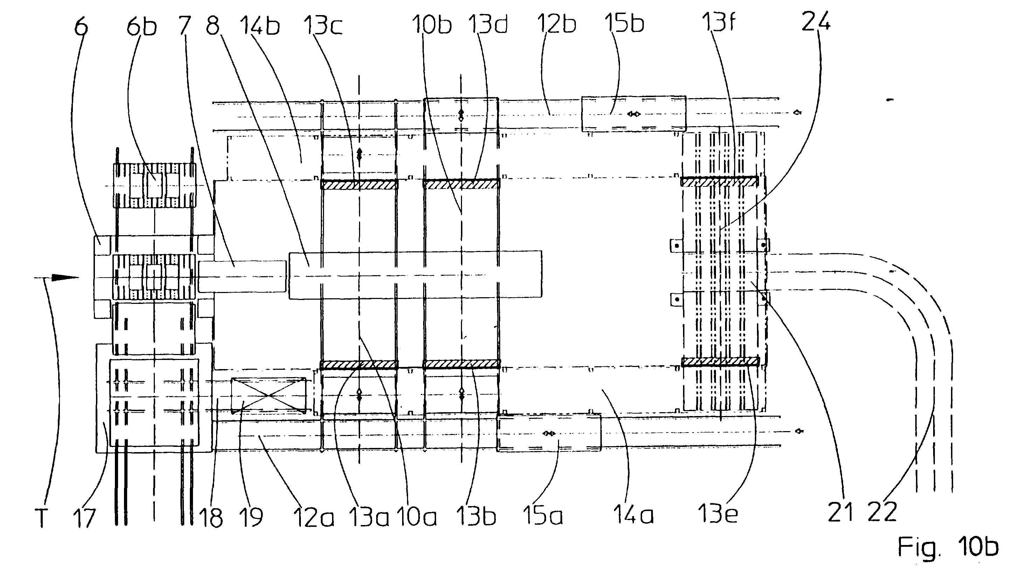

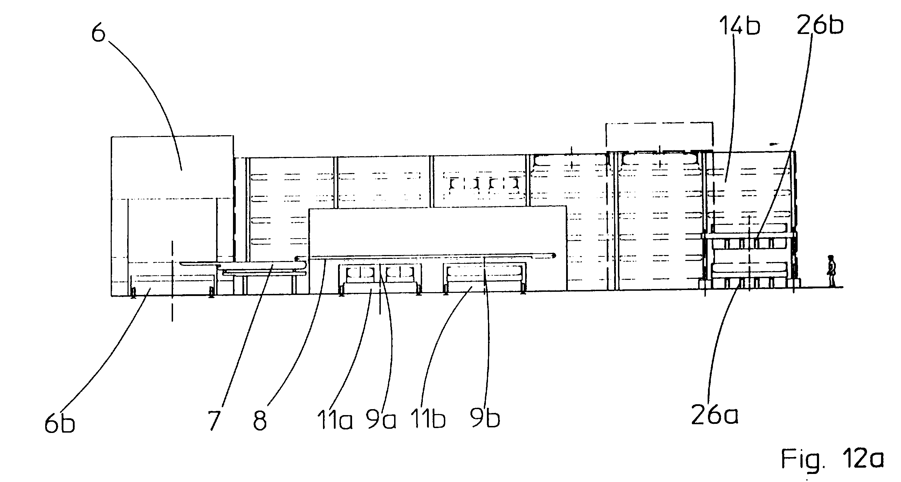

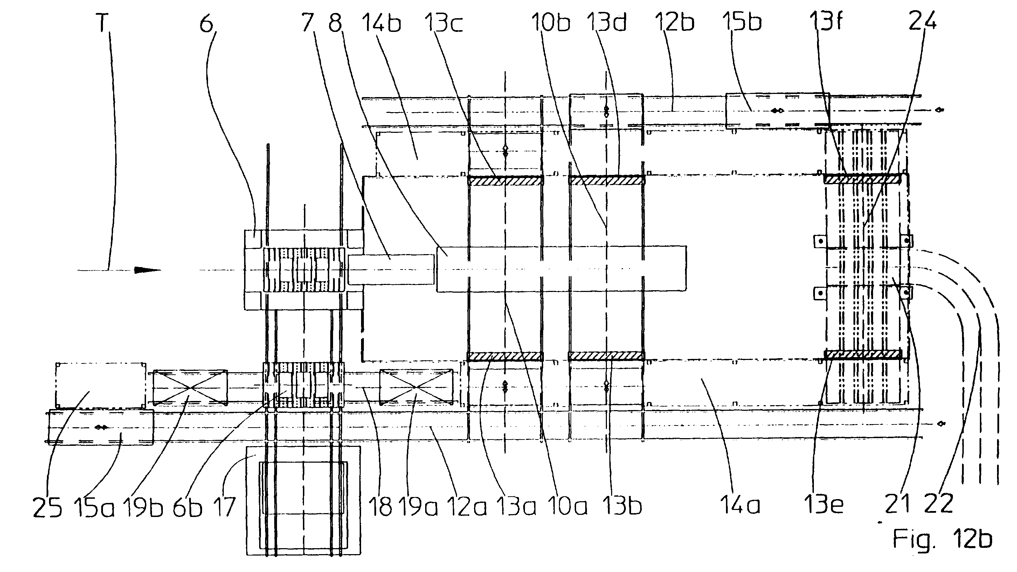

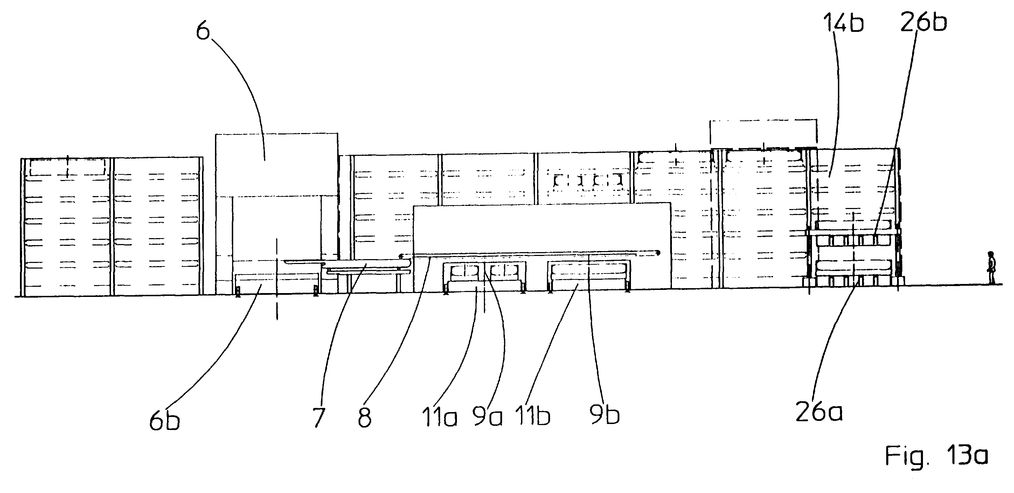

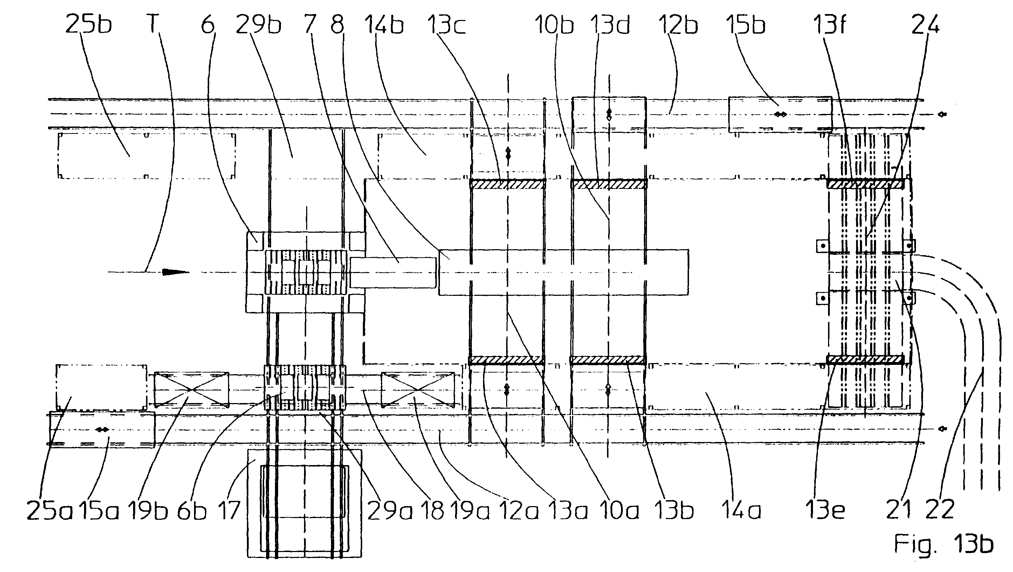

Bei den in Fig. 8a bis 13b abschnittsweise gezeigten Vorrichtungen ist der erste Längsweg 12a, 12b jeweils an der Außenseite des ihm zugeordneten Regals 14a, 14b vorgesehen, d.h. das Regal 14a, 14b befindet sich zwischen dem ersten Längsweg 12a, 12b und dem Längsstapler 8. Die Öffnungen 13a, 13b, 13c, 13d, 13e, 13f sind hier jeweils als Durchgänge ausgebildet, so daß auf den ersten Querwegen 10a, 10b und dem zweiten Querweg 24 ggf. geführte erste 11a, 11b und zweite Fördermittel 20, 20a, 20b bzw. darauf aufgenommenes Transportgut jeweils durch das Regal 14a, 14b hindurchbewegbar ist.

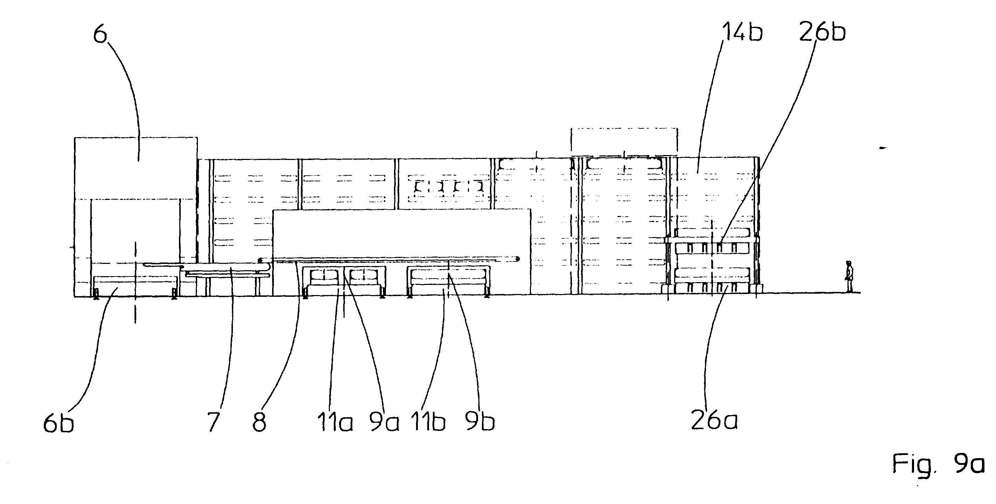

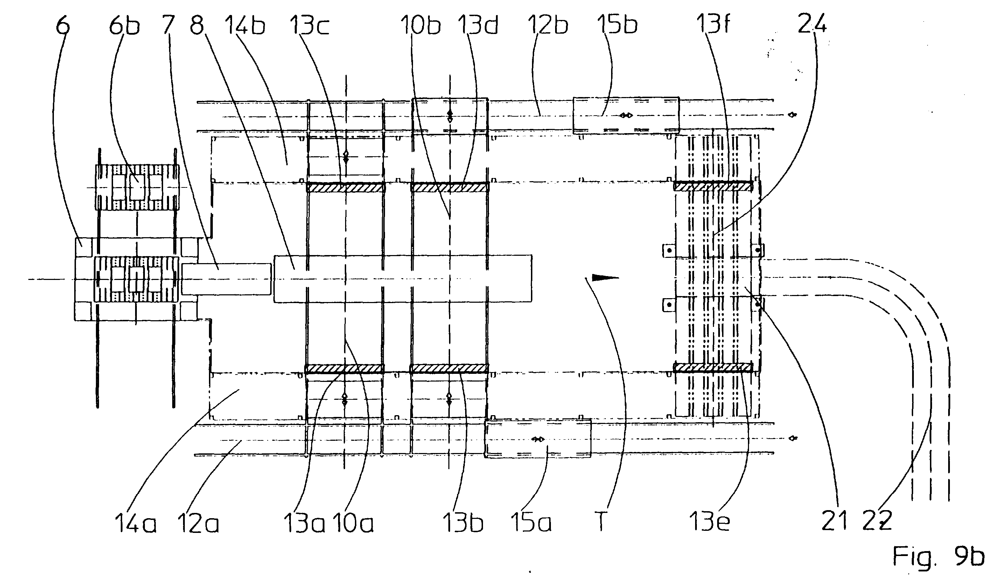

Bei der in den Fig. 9a und 9b abschnittsweise gezeigten neunten Vorrichtung ist das zweite Querfördermittel aus einem unteren 26a sowie einem oberen Kettenförderer 26b gebildet. Die Kettenförderer 26a, 26b erstrecken sich durch die als Durchgang ausgebildeten Öffnungen 13e, 13f in das Regal 14a, 14b, so daß darauf transportiertes Transportgut von den ersten Längsförderern 15a, 15b aufgenommen werden kann.

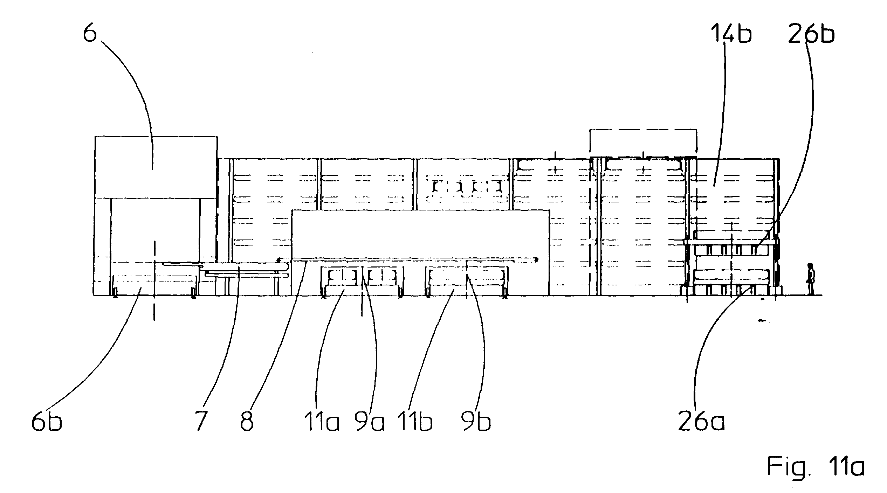

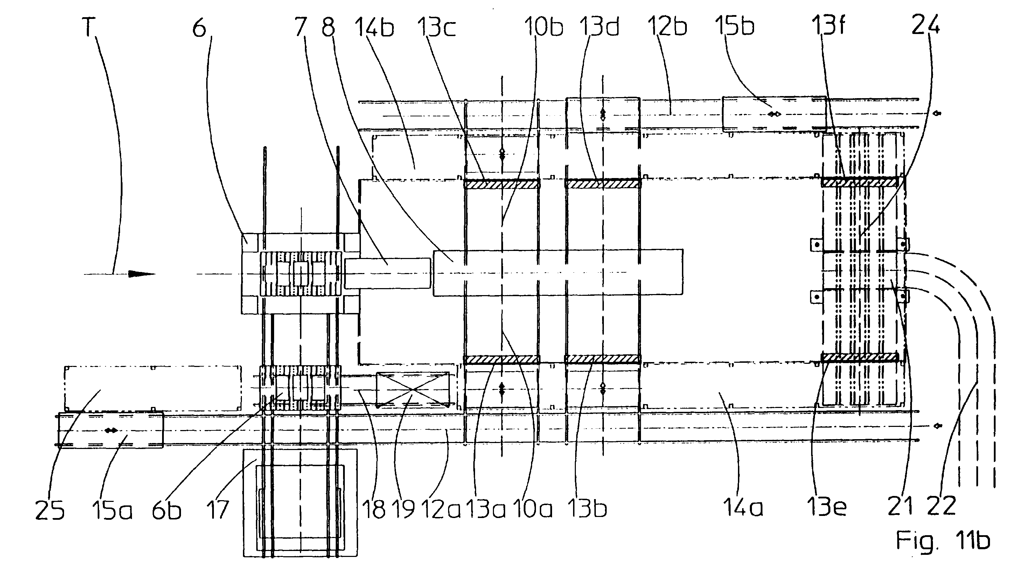

Bei der abschnittsweise in den Fig. 11a und 11b gezeigten elften Vorrichtung befindet sich das weitere Regal 25 auf derselben Seite des ersten Längswegs 12a wie das Regal 14a.

Die Funktion der Vorrichtung ist folgende:

Von der Blechrolle 2a, 2b abgewickeltes Blechband B wird in der Reinigungsstation 3 gereinigt und nachfolgend mittels der Walzenrichtmaschine 4 gerichtet. Die Schlaufenmulde 5 gewährleistet ein kontinuierliches Abwickeln des Blechbands B. In der mit einem Schneidwerkzeug 6a versehenen Presse 6 werden aus dem Blechband B Blechplatten geschnitten. Die Blechplatten werden über den Teleskoprollengang 7 dem ersten Längsstapler zugeführt. Dort werden sie mittels magnetischer Kräfte oder Unterdruck aufgenommen und zu einer der Stapelpositionen 9a, 9b transportiert. Durch Ausschalten einer die Magnetkräfte oder den Unterdruck erzeugenden Einrichtung werden die Blechplatten in der Stapelposition 9a, 9b abgelegt. Die Stapelposition 9a, 9b befindet sich vorteilhafterweise auf einem quer zur Transportrichtung T verfahrbaren schienengebundenen Wagen 11a, 11b.

Sobald ein Stapel vorgegebener Höhe auf z.B. einen schienengebundenden Wagen aufweisenden ersten Querfördermittel 11a, 11b gebildet ist, wird dieser in die Nähe eines ersten Längswege 12a, 12b verfahren. Dabei kann das erste Querfördermittel 11a, 11b in die Öffnung/en 13a bis 13d bzw. durch das Regal 14a, 14b verfahren werden. Als erstes Querfördermittel 11a, 11b kann statt einem Wagen 11a, 11b auch ein Kettenförderer oder ein Rollengang zum Einsatz kommen.

Sobald sich das erste Querfördermittel 11a, 11b in der Nähe des ersten Längswegs 12a, 12b befindet, wird ein erstes Längsfördermittel 15a, 15b, z.B. ein schienengebundener Wagen, so verfahren, daß das erste Querfördermittel 11a, 11b und das erste Längsfördermittel 15a, 15b einander gegenüberliegen. Die Stapel werden vom ersten Querfördermittel 11a, 11b an das erste Längsfördermittel 15a, 15b übergeben. Beim ersten Längsfördermittel 15a, 15b kann es sich vorzugsweise um ein schienengebundenes Regalfahrzeug handeln, mit dem die Stapel horizontal und vertikal bewegbar sind.

Der auf den ersten Längsfördermittel 15a, 15b aufgenommene Stapel wird an eine bestimmte durch eine automatische Steuerung vorgegebene Position im Regal 14a, 14b, 25, 25a, 25b transportiert und dort abgelegt.

Mittels des zweiten Querfördermittels 20, 20a, 20b, 26a, 26b ist ein Austausch von Stapeln vom einen Regal 14a, 25, 25a zum anderen Regal 14b, 25b möglich. Gleichfalls ist es möglich, mittels des zweiten Querfördermittels 20, 20a, 20b vom ersten Längsfördermittel 15a, 15b übernommene Stapel einem weiteren Transportmittel 23, 23a, 23b zuzuführen. Das weitere Transportmittel 23 kann dazu in eine Andockstelle 21 bewegt werden. Beim weiteren Transportmittel 23, 23a, 23b handelt es sich vorteilhafterweise um ein fahrerloses Transportsystem.

Neben der Presse 6 kann ein Querstapler 17 vorgesehen sein. Damit können weitere durch ein zweites Längsfördermittel 19, 19a, 19b gebildete Stapelposition bedient werden. Vom zweiten Längsfördermittel 19, 19a, 19b aufgenommene Stapel können nach Verfahren in eine geeignete Position an das erste Längsfördermittel 15a übergeben werden. Auch beim zweiten Längsfördermittel 19, 19a, 19b kann es sich um einen schienengebundenen Wagen einen Kettenförderer oder einen Rollengang handeln.

An der dem Längsstapler 8 zugewandten Innenwand der Regale 14, 14a, 14b, 25, 25a, 25b kann vorteilhafterweise eine Schallschutzwand 16a, 16b befestigt sein. Dadurch wird vom Längsstapler 8 sowie den anderen Einrichtungen ausgehender Lärm absorbiert.

Die Vorrichtung kann vollautomatisch durch eine prozeßrechnergesteuerte (hier nicht gezeigte) Einheit gesteuert werden. Dazu sind in den Längs- und Querfördermitteln sowie dem weiteren Transportmittel entsprechende Einrichtungen vorgesehen.

### Bezugszeichenliste

- 1: Doppelhaspel
- 2a: erste Blechrolle
- 2b: zweite Blechrolle
- 3: Reinigungsstation
- 4: Walzenrichtmaschine
- 5: Schlaufenmulde
- 6: Presse
- 6a: Werkzeug
- 6b: Wechseltisch
- 7: Teleskopförderer
- 8: Längsstapler
- 9a, 9b: Stapelposition
- 10a, 10b: erster Querweg
- 11a, 11b: erstes Querfördermittel
- 12a, 12b: erster Längsweg
- 13a, 13b, 13c, 13d, 13e, 13f: Öffnung
- 14a, 14b: Regal
- 15a, 15b: erstes Längsfördermittel
- 16a, 16b: Schallschutzwand
- 17: Querstapler
- 18: zweiter Längsweg
- 19, 19a, 19b: zweites Längsfördermittel
- 20, 20a, 20b: zweites Querfördermittel
- 21: Andockstelle
- 22, 22a, 22b: weiterer Transportweg
- 23, 23a, 23b: weiteres Transportmittel
- 24: zweiter Querweg
- 25, 25a, 25b: weiteres Regal
- 26a, 26b: oberer/unterer Kettenförderer
- B: Blechband
- T: Transportweg
- S1a, S1b: erste Stirnseite
- S2a, S2b: zweite Stirnseite

## Patentansprüche

1. Verfahren zum Transport von plattenförmigem Transportgut mit folgenden Schritten:
a) Transport des Transportguts entlang eines vorgegebenen Transportwegs (T) mittels eines Längstransportmittels (8),
b) Übergabe des Transportguts an mindestens ein erstes Querfördermittel (11a, 11b),
c) Transport des Transportguts mittels des ersten Querfördermittels (11a, 11b) entlang einem dazugehörigen quer zum Transportweg (T) verlaufenden ersten Querweg (10a, 10b),
d) wahlweise Übergabe des Transportguts an eines von mindestens zwei ersten Längsfördermitteln (15a, 15b) und
e) Transport des Transportguts mittels eines der ersten Längsfördermittel (15a, 15b) entlang einem dazugehörigen parallel zum Transportweg (T) verlaufenden ersten Längsweg (12a, 12b).

2. Verfahren nach Anspruch 1, wobei das Transportgut mittels des Längstransportmittels (8) hängend transportiert wird.

3. Verfahren nach einem der vorhergehenden Ansprüche, wobei das Transportgut auf dem ersten Querfördermittel (11a, 11b) abgelegt wird.

4. Verfahren nach einem der vorhergehenden Ansprüche, wobei auf dem ersten Querfördermittel (11a, 11b) ein aus Transportgut bestehender Stapel gebildet wird.

5. Verfahren nach Anspruch 4, wobei bei den Schritten lit. c bis lit. e anstelle des Transportguts der Stapel transportiert bzw. übergeben wird.

6. Verfahren nach einem der vorhergehenden Ansprüche, wobei das Transportgut wahlweise an eines von zwei ersten ersten Querfördermittel (11a, 11b) übergeben wird.

7. Verfahren nach einem der vorhergehenden Ansprüche, wobei der Transportweg (T) sich zwischen die beiden ersten Längswege (12a, 12b) erstreckt.

8. Verfahren nach einem der vorhergehenden Ansprüche, wobei der/die ersten Querwege (10a, 10b) zwischen den beiden ersten Längswegen (12a, 12b) vorgesehen ist/sind.

9. Verfahren nach einem der vorhergehenden Ansprüche, wobei das Transportgut mittels der ersten Längsfördermittel (15a, 15b) einem der ersten Längswege (12a, 12b) zugeordneten Speichermittel (14a, 14b, 25, 25a, 25b) zugeführt bzw. daraus entnommen wird.

10. Verfahren nach Anspruch 9, wobei jedem der Längswege (12a, 12b) ein Speichermittel (14a, 14b, 25, 25a, 25b) zugeordnet ist.

11. Verfahren nach einem der vorhergehenden Ansprüche, wobei das Speichermittel (14a, 14b, 25, 25a, 25b) ein Regal ist.

12. Verfahren nach einem der vorhergehenden Ansprüche, wobei vom Längstransportmittel (8) erzeugter Lärm durch eine jedem Regal zugeordnete parallel zum ersten Längsweg (12a, 12b) verlaufende Schallschutzwand (16a, 16b) gedämmt wird.

13. Verfahren nach einem der vorhergehenden Ansprüche, wobei die Schallschutzwand (16a, 16b) in der Nähe der dem Längstransportmittel (8) zugewandten Seite des Regals vorgesehen ist.

14. Verfahren nach einem der vorhergehenden Ansprüche, wobei das Speichermittel (14a, 14b, 25, 25a, 25b) zwischen den ersten Längswegen (12a, 12b) und dem Längstransportmittel (8) angeordnet ist.

15. Verfahren nach einem der vorhergehenden Ansprüche, wobei zwischen den Speichermitteln (14a, 14b, 25, 25a, 25b) und dem Längstransportmittel (8) die ersten Längswege (12a, 12b) angeordnet sind.

16. Verfahren nach einem der vorhergehenden Ansprüche, wobei das Transportgut auf dem ersten Querweg (10a, 10b) durch eine im Speichermittel (14a, 14b, 25, 35a, 25b) vorgesehenene Öffnung (19a, 13b, 13c, 13d, 13f) transportiert wird.

17. Verfahren nach einem der vorhergehenden Ansprüche, wobei das Transportgut mittels des ersten Längsfärdermittels (15a, 15b) vertikal und/oder horizontal zum Ablegen in das bzw. zum Aufnehmen aus dem Speichermittel (14a, 14b, 25, 25a, 25b) bewegt wird.

18. Verfahren nach einem der vorhergehenden Ansprüche, wobei das Transportgut vom ersten Längsfördermittel (15a, 15b) an ein weiteres Transportmittel (23, 23a, 23b) übergeben wird.

19. Verfahren nach einem der vorhergehenden Ansprüche, wobei ein zweites die beiden ersten Längswege (12a, 12b) in der Nähe zweiter Stirnseiten (S2a, S2b) verbindendes Querfördermittel (20, 20a, 20b) vorgesehen ist.

20. Verfahren nach einem der vorhergehenden Ansprüche, wobei das Transportgut vom ersten Längsfördermittel (15a, 15b) an das zweite Querfördermittel (20, 20a, 20b) übergeben wird.

21. Verfahren nach einem der vorhergehenden Ansprüche, wobei das Transportgut entlang eines zweiten Querwegs (24) quer zum Transportweg (T) transportiert wird.

22. Verfahren nach einem der vorhergehenden Ansprüche, wobei das Transportgut vom zweiten Querfördermittel (20, 20a, 20b) dem weiteren Transportmittel (23, 23a, 23b) zugeführt wird.

23. Verfahren nach einem der vorhergehenden Ansprüche, wobei das weitere Transportmittel (23, 23a, 23b) Bestandteil eines fahrerlosen Transportsystems ist.

24. Verfahren nach einem der vorhergehenden Ansprüche, wobei das Transportgut wahlweise an ein dem Längstransportmittel (8) entgegen der Transportrichtung (T) vorgeschaltetes Quertransportmittel (17) übergeben wird.

25. Verfahren nach Anspruch 24, wobei das Transportgut vom Quertransportmittel (17) an ein zweites Längsfördermittel (19, 19a, 19b) übergeben wird.

26. Verfahren nach Anspruch 25, wobei das Transportgut mittels des zweiten Längsfördermitteis (19, 19a, 19b) entlang einem dazugehörigen parallel zum Transportweg (T) verlaufenden zweiten Längsweg (18) transportiert wird.

27. Verfahren nach Anspruch 26, wobei das Transportgut vom zweiten (19, 19a, 19b) an das erste Längsfördermittel (15a, 15b) übergeben wird.

28. Verfahren nach einem der vorhergehenden Ansprüche, wobei mittels eines auf einem dritten Querweg verfahrbaren Wechseltischs (6b) und des ersten Längsfördermittels (15a, 15b) ein Werkzeug (6a) in einer dem Längstransportmittel (8) entgegen der Transportrichtung vorgeschalteten Vorrichtung (6) zum Schneiden ausgetauscht wird.

29. Vorrichtung zum Transport von plattenförmigem Transportgut mit
aa) einem Längstransportmittel (8) zum Transport des Transportguts entlang eines vorgegebenen Transportwegs (T),
bb) mindestens einem ersten Querfördermittel (11a, 11b) zum Transport des Transportguts entlang einem dazugehörigen quer zum Transportweg (T) verlaufenden ersten Querweg (10a, 10b),
cc) wobei das erste Querfördermittel in bezug zum Längstransportmittel so angeordnet ist, daß das Transportgut vom Längstransportmittel an das erste Querfördermittel übergebbar ist,
dd) mindestens zwei ersten Längsfördermitteln (15a, 15b) zum Transport des Transportguts entlang einem dazugehörigen parallel zum Transportweg verlaufenden ersten Längsweg (12a, 12b),
ee) wobei die ersten Längsfördermittel (15a, 15b) in bezug zum ersten Querfördermittel (11a, 11b) so angeordnet sind, daß das Transportgut vom ersten Querfördermittel (11a, 11b) wahlweise an eines der ersten Längsfördermittel (15a, 15b) übergebbar ist.

30. Vorrichtung nach Anspruch 29, wobei das Längstransportmittel (8) eine Einrichtung zum hängenden Transport des Transportguts aufweist.

31. Vorrichtung nach einem der Ansprüche 29 oder 30, wobei das Transportgut auf dem ersten Querfördermittel (11a, 11b) ablegbar, vorzusweise stapelbar, ist.

32. Vorrichtung nach einem der Ansprüche 29 bis 31, wobei der Transportweg (T) zwischen die beiden ersten Längswege (12a, 12b) sich erstreckt.

33. Vorrichtung nach einem der Ansprüche 29 bis 32, wobei zwei erste Querfördermittel (11a, 11b) vorgesehen sind.

34. Vorrichtung nach einem der Ansprüche 29 bis 33, wobei der/die erste/n Querweg/e (10a, 10b) zwischen den beiden ersten Längswegen (12a, 12b) vorgesehen ist/sind.

35. Vorrichtung nach einem der Ansprüche 29 bis 34, wobei einem, vorzugsweise jedem, der ersten Längswege (12a, 12b) ein Speichermittel (14a, 14b, 25, 25a, 25b) zum Speichern von Transportgut zugeordnet ist.

36. Vorrichtung nach einem der Ansprüche 29 bis 35, wobei das Speichermittel (14a, 14b, 25, 25a, 25b) ein Regal ist.

37. Vorrichtung nach einem der Ansprüche 29 bis 36, wobei jedes Regal mit einer parallel zum ersten Längsweg (12a, 12b) verlaufenden Schallschutzwand (16a, 16b) versehen ist.

38. Vorrichtung nach einem der Ansprüche 29 bis 37, wobei die Schallschutzwand (16a, 16b) in der Nähe der dem Längstransportmittel (8) zugewandten Seite des Regals vorgesehen ist.

39. Vorrichtung nach einem der Ansprüche 29 bis 38, wobei das/die Speichermittel (14a, 14b, 25, 25a, 25b) zwischen dem ersten Längsweg (12a, 12b) und dem Längstransportmittel (8) angeordnet ist/sind.

40. Vorrichtung nach einem der Ansprüche 29 bis 39, wobei zwischen den Speichermitteln (14a, 14b, 25, 25a, 25b) und dem Längstransportmittel (8) die ersten Längswege (12a, 12b) angeordnet sind.

41. Vorrichtung nach einem der Ansprüche 29 bis 40, wobei das erste Querfördermittel (11a, 11b) und/oder das erste Längsfördermittel (15a, 15b) einen schienengebundenen Wagen, einen Kettenförderer oder einen Rohlengang aufweist/en.

42. Vorrichtung nach einem der Ansprüche 29 bis 41, wobei im Speichermittel (14a, 14b, 25, 25a, 25b) eine Öffnung (13a, 13b, 13c, 13d, 13e, 13f) für das erste Querfördermittel (11a, 11b) vorgesehen ist.

43. Vorrichtung nach einem der Ansprüche 29 bis 42, wobei das Transportgut mittels des ersten Längsfördermittels (15a, 15b) vertikal und/oder horizontal zum Ablegen in das bzw. zum Aufnehmen aus dem Speichermittel (14a, 14b, 25, 25a, 25b) bewegbar ist.

44. Vorrichtung nach einem der Ansprüche 29 bis 43, wobei eine Einrichtung (21) zum Übergeben des Transportguts vom ersten Längsfördermittel (15a, 15b) an das zweite Querfördermittel (20, 20a, 20b) vorgesehen ist.

45. Vorrichtung nach einem der Ansprüche 29 bis 44, wobei ein zweites die beiden ersten Längswege (12a, 12b) in der Nähe zweiter Stirnseiten (S2a, S2b) verbindendes einen zweiten Querweg (24) bildendes Querfördermittel (20, 20a, 20b) vorgesehen ist.

46. Vorrichtung nach einem der Ansprüche 29 bis 45, wobei eine Einrichtung zum Übergeben des Transportguts vom ersten Längsfördermittel (15a, 15b) an das zweite Querfördermittel (20, 20a, 20b) vorgesehen ist.

47. Vorrichtung nach einem der Ansprüche 29 bis 46, wobei eine Einrichtung (21) zum Zuführen des Transportguts vom zweiten Querfördermittel (20, 20a, 20b) zu einem weiteren Transportmittel (23, 23a, 23b) vorgesehen ist.

48. Vorrichtung nach einem der Ansprüche 29 bis 47, wobei das weiteres Transportmittel (23, 23a, 23b) Bestandteil eines fahrerlosen Transportsystems ist.

49. Vorrichtung nach einem der Ansprüche 29 bis 48, wobei dem Längstransportmittel entgegen der Transportrichtung (8) ein Quertransportmittel (17) vorschaltet ist.

50. Vorrichtung nach einem der Ansprüche 26 bis 49, wobei eine Einrichtung (7) zum Übergeben des Transportguts vom Quertransportmittel (17) an ein zweites Längsfördermittel (19, 19a, 19b) vorgesehen ist.

51. Vorrichtung nach einem der Ansprüche 29 bis 50, wobei das Transportgut mittels des zweiten Längsfördermittels (19, 19a, 19b) entlang einem dazugehörigen parallel zum Transportweg (T) verlaufenden zweiten Längsweg (18) transportierbar ist.

52. Vorrichtung nach einem der Ansprüche 29 bis 51, wobei eine Einrichtung zur Übergabe des Transportguts vom zweiten (19, 19a, 19b) an das erste Längsfördermittel (15a, 15b) vorgesehen ist.

53. Vorrichtung nach einem der Ansprüche 29 bis 52, wobei dem Längstransportmittel (8) entgegen der Transportrichtung (T) eine Vorrichtung (6, 6a) zum Schneiden von Blechen vorgeschaltet ist.

54. Vorrichtung nach einem der Ansprüche 29 bis 53, wobei ein auf einem dritten Querweg verfahrbarer Wechseltisch (6b) zum Wechseln eines Werkzeugs (6a) der Vorrichtung zum Schneiden (6, 6a) vorgesehen ist.

55. Vorrichtung nach einem der Ansprüche 29 bis 54, wobei die ersten Querwege (10a, 10b) den Transportweg (T) kreuzen.

56. Vorrichtung nach einem der Ansprüche 29 bis 55, wobei entgegen der Transportrichtung (T) der Vorrichtung (6, 6a) zum Schneiden von Blechen eine um eine vertikale Achse drehbare Doppelhaspel (1) zur Aufnahme zweier Blechrollen (2a, 2b) vorgesehen ist.
